# EUROPEAN PATENT APPLICATION

(11) **EP 2 797 303 A1**
(43) Date of publication of application: **29.10.2014**
(21) Application number: 13165490.7
(22) Date of filing: 26.04.2013
(51) Int. Cl.: H04N 1/00, G06F 3/0481

(54) **Apparatus having a number of options for operating and/or configuring the apparatus and method and computer program product therefor**

(71) Applicant: Océ-Technologies B.V., 5914 CA Venlo (NL)
(72) Inventor: The designation of the inventor has not yet been filed
(74) Representative: Groen, Mark Jacobus

(57) **Abstract**

Apparatus having a number of options for operating and/or configuring the apparatus, comprising user interface generation means, the user interface generation means being arranged to present an option to a user to allow the user to select the option in order to configure and/or operate the apparatus; option predicting means for determining for an option of the at least part of the options the likelihood that the user will select the option; wherein the user interface generation means generate in the user interface the at least part of the options with at least one option being highlighted corresponding to the likelihood determined by the option predicting means.

## Description

### FIELD OF THE INVENTION

The present invention relates to an apparatus having a number of options for operating and/or configuring the apparatus, comprising: user interface generation means, the user interface generation means being arranged to present an option to a user to allow the user to select the option in order to configure and/or operate the apparatus.

The present invention further relates to a method for operating and/or configuring such an apparatus. The present invention also relates to a computer program product that, when executed on a processor, performs such a method.

### BACKGROUND OF THE INVENTION

Present day apparatuses often comprise microprocessors for performing part of the tasks or activities of the apparatus. The use of microprocessors provides a lot of flexibility: at the one hand during actual operation, and at the other hand by updating the software running on the microprocessor thereby solving issues but also introducing new functionality without the need for drastic modifications to the (hardware of) the apparatus. The flexibility allowed by the use of a microprocessor and implementation of (part of) the functionality in software is usually regarded as an advantage allowing a lot of configuration and customisation of the apparatus and sometimes providing several variations of functionality. However, with the growing number of configurations, customisations, and supported operations, it becomes more and more challenging to design an apparatus that is easy and intuitive to operate. An abundance of options and possible operations easily leads to a complex user interface wherein a user gets confused. Although the amount of configurations, customisations, and operations might theoretically provide a lot of flexibility and freedom, the usability of the apparatus will actually degrade the more configurations, customisations, and operations are provided to a user.

An example of an apparatus where the user interface might provide a number of configurations, customisations, and operations that might overwhelm a user is a reprographical apparatus, such as a multi-functional office printer. Such apparatuses offer a large number of configurations such as duplexing, binding edge, stapling, stacking, folding, booklet printing, n-up printing, media size, media orientation, media type, paper source trays, output bins, margin shifting , scaling/fitting to media, colour mapping, halftoning, image mirroring, watermarking, page order, collating, cover printing, banner printing, to name the best known configurations. In order to reduce the perceived complexity, these configurations, customisations, and operations are usually organised and presented in a hierarchical way, for example configurations for printing are organised in a printing section of the user interface, while scanning configurations are organised in a scanning section. Other structures are possible, for example grouping configurations by function (all finishing configurations for example), and organisational structures may be combined. However, configurations, customisations, and operations may still be organised in a way that is not completely intuitive and/or users may still be overwhelmed by the large number of options the user interface is providing him. The user interface generation means may be a visual user interface, or alternatively an audible/voice controlled user interface.

The object of the present invention is to reduce the complexity of the user interface of an apparatus.

### SUMMARY OF THE INVENTION

According to the present invention this object is achieved by an apparatus having a number of options for operating and/or configuring the apparatus, comprising: user interface generation means, the user interface generation means being arranged to present an option to a user to allow the user to select the option in order to configure and/or operate the apparatus; option predicting means for determining for an option of the at least part of the options the likelihood that the user will select the option; wherein the user interface generation means generate in the user interface the at least part of the options with at least one option being highlighted corresponding to the likelihood determined by the option predicting means.

The word "option" should be interpreted in the broad sense of every option or choice a user has in operating and configuring the device. For example, an option may refer to specific operations, such as starting an actual print process or copy process; it may refer to a more narrower meaning of the word "option" such as alternative ways of processing a specific operation, such as operating in black & white, grayscale, or full-colour mode, and printing simplex or duplex; it may refer to optional functionality such as stapling the paper in the output bin or not; and it may refer to configurations of the apparatus such as enabling a sleep timer in order to conserve energy during periods of non-use. The word "option" may even refer to (hardware or software) buttons for navigating the user interface, for example for calling up a menu, selecting a menu item, etc. So the word option may refer to anything in the user interface that a user can act upon.

By highlighting the available options in accordance with the likelihood of the options being selected next by the user, the user is guided in determining what option to select next. The highlighting is merely a suggestion of the apparatus and does not restrict the user. All the options the user would be given in a specific state or situation are still available as it would in prior art apparatuses. The novel aspect of the invention is that the available options are presented to the user with the presentation of the options differing such that they attract his attention more or less in dependence of the likelihood of the user selecting the particular option subsequently.

According to a specific embodiment of the apparatus an option having the highest likelihood according to the option predicting means is highlighted, and options having a lower likelihood than the highest likelihood are not highlighted. By highlighting only the option that is anticipated to be selected next, the user is given clear guidance in what the most likely option for him to select is in operating the apparatus. The user still has the option of choosing every option that he wants, but his attention will be drawn first to the option that he is most likely to select.

According to an embodiment of the apparatus an option being highlighted comprises displaying the option in the user interface with a display property of the option being determined by the likelihood of the option as determined by the option predicting means.

According to a more specific embodiment of the apparatus the display property is at least one of a colour and a size, and a contrast with regard to the background of the displayed option. For example, the more likely the option is to be selected, the higher the intensity of the colour or the higher the saturation of the colour or the larger the text wherein the option is displayed, while the less likely the option is to be selected, the less the intensity of the colour or the less the saturation of the colour or the smaller the text wherein the option is displayed. The display property may be applied to a text on a button, to a button itself, or to an icon. Alternatively, the more likely option or options may be indicated by a specific indicator character or icon, for example by displaying an additional character such as an exclamation mark, an asterisk character or any other suitable character.

According to an embodiment the apparatus further comprises a storage storing for an option a likelihood parameter for deriving the likelihood that the particular option will be selected, and the option prediction means determine the likelihood of an option to be selected based on the stored likelihood parameter for the particular option. The likelihood parameter may be either an actual likelihood or for example a number of occurrences of the options in the past.

According to an embodiment the apparatus further comprises likelihood parameter updating means for generating and/or updating the stored likelihood parameters. This is advantageous as the apparatus will adapt its suggestions to the actual usage of the apparatus. It is noted that a list of stored likelihood parameters may be initially empty or even not exist in the storage and will be built up during use of the user interface of the apparatus. The stored likelihood parameters may also be linked to a specific user of group of users in order to closer reflect the (specific) behaviour of an individual user or group of users.

According to an embodiment of the apparatus the likelihood updating means tracks for each pair of an option and a subsequently selected option the amount of occurrences during the operation of the apparatus by users or individual users, and the option prediction means determine the likelihood of an option to be selected based on the last selected option and the stored amount of occurrences of subsequently selected options for this last selected option. The amount of occurrences may be absolute numbers or numbers relative with respect to other options. By counting the number of occurrences of each pair of subsequent options, the apparatus will adapt its predictive behaviour to the actual usage of the apparatus.

According to an embodiment of the apparatus the storage comprises a preconfigured likelihood parameter for a pair comprising of a last selected option and an option to be selected of the at least part of the options, and the option prediction means determine the likelihood of an option to be selected based on the last selected option and the preconfigured likelihood parameter stored in the storage.

According to an embodiment the apparatus comprises a reprographical apparatus, such as a printer, a scanner, a copy machine and/or a facsimile machine.

The invention also relates to a method for operating and/or configuring an apparatus having a number of options for operating and/or configuring the apparatus, comprising presenting a user interface to a user, the user interface comprising an option of the options for operating and/or configuring the apparatus; receiving a user input selecting the option; determining for each option of a part of the options for operating and/or configuring the apparatus the likelihood that the user will select that particular option; and presenting in the user interface the at least second part of the options with at least one option of the at least part of the options being highlighted corresponding to the determined likelihood of the option.

According to an embodiment of the method an option being highlighted comprises displaying the option in the user interface with a display property of the option being determined by the determined likelihood of the option.

According to an embodiment the method further comprises the steps of storing for an option a likelihood parameter for deriving the likelihood that the particular option will be selected; and wherein determining the likelihood of an option to be selected comprises determining this likelihood based on the stored likelihood parameter for the particular option. The likelihood parameter may be either an actual likelihood or for example number of occurrences in the past.

According to an embodiment the method further comprises the step of generating an updated likelihood parameter based on one or more options being selected by the user, and storing the updated likelihood parameters. It is noted that a list of stored likelihood parameters may be initially empty or even not exist in the storage and will be built up during use of the user interface of the apparatus.

According to an embodiment the method comprises the further steps of generating an updated likelihood parameter comprises tracking for each pair of an option and a subsequently selected option the amount of occurrences during the operation of the apparatus by a user, and determining the likelihood of an option to be selected comprises determining the likelihood based on the last selected option and the stored amount of occurrences of subsequently selected options for this last selected options. The amount of occurrences may be absolute numbers or numbers relative with respect to other options.

The invention also relates to a computer program product that, when executed on a processor, performs the method of any of the previous embodiments of the method.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: is a schematic diagram of an environment comprising a reprographic system;
- Fig. 2: is a schematic diagram of a control unit of a reprographic system according to Fig. 1;
- Fig. 3 - 5: show schematically screens of a user interface according to the invention;
- Fig. 6: shows a table as used in an apparatus according to the present invention, the table storing the most likely subsequent option being selected, given a previous selected option;
- Fig. 7: shows a table as used in an apparatus according to the present invention, the table storing a likelihood of a subsequent option being selected, given a previous selected option;
- Fig. 8: shows a table as used in an apparatus according to the present invention, the table storing the number of occurrences for a subsequent option to be selected, given a previous selected option;
- Fig. 9: is a flow diagram of a first embodiment of the method according to the invention; and
- Fig. 10: is a flow diagram of a second embodiment of the method according to the invention.

### DETAILED DESCRIPTION OF EMBODIMENTS

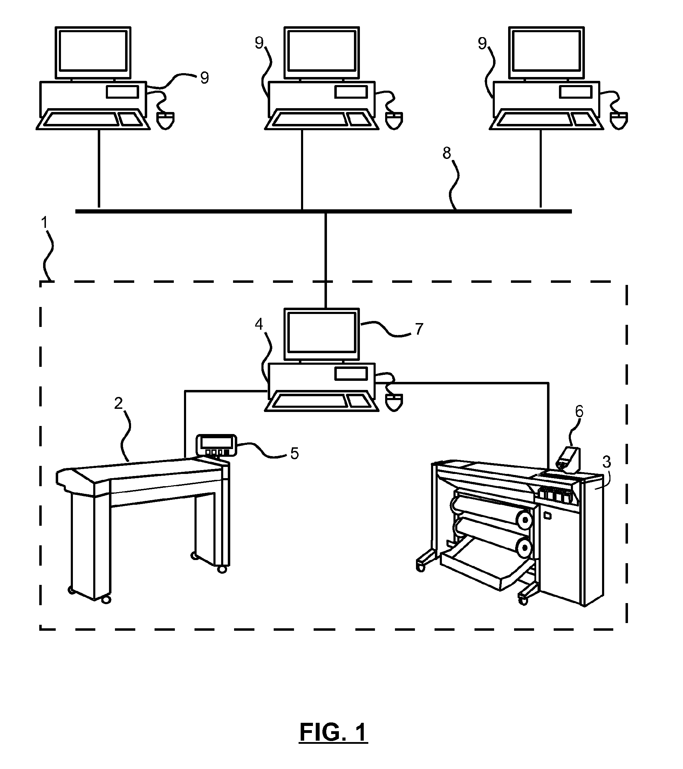

Fig. 1 is a schematic diagram of an environment which comprises a reprographic system 1. The reprographic system 1 as presented here comprises a scanning apparatus 2, a printing apparatus 3 and a control unit 4. The control unit 4 is connected to a network 8 so that a number of client computers 9, also connected to the network 8, may make use of the reprographic system 1.

The scanning apparatus 2 is provided for scanning an image carrying object. The scanning apparatus 2 may be provided with a colour image sensor (i.e. a photoelectric conversion apparatus) which converts the reflected light into electric signals corresponding to the primary colours red (R), green (G) and blue (B). The colour image sensor may be for example a CCD type sensor or a CMOS type sensor. A local user interface panel 5 is provided for starting scan and copy operations.

The printing unit 3 is provided for printing images on image receiving members. The printing unit may use any kind of printing technique. It may be an inkjet printer, a pen plotter, or a press system based on an electro-(photo)graphical technology, for instance.

The inkjet printer may be for example a thermal inkjet printer, a piezoelectric inkjet printer, a continuous inkjet printer or a metal jet printer. A marking material to be disposed may be a fluid like an ink or a metal, or a toner product. In the example shown in Fig. 1, printing is achieved using a wide format inkjet printer provided with four different basic inks, such as cyan, magenta, yellow and black. The housing contains a print head which is mounted on a carriage for printing swaths of images. The images are printed on an ink receiving medium such as a sheet of paper supplied by a paper roll. A local user interface panel 6 may be provided with input means such as buttons.

The scanning apparatus 2 and the printing apparatus 3 are both connected to the control unit 4. The control unit 4 executes various tasks such as receiving input data from the scanning apparatus 2, handling and scheduling data files, which are submitted via the network 8, controlling the scanning apparatus 2 and the printing apparatus 3, converting image data into printable data etc. The control unit 4 is provided with a user interface panel 7 for offering the operator a menu of commands for executing tasks and making settings.

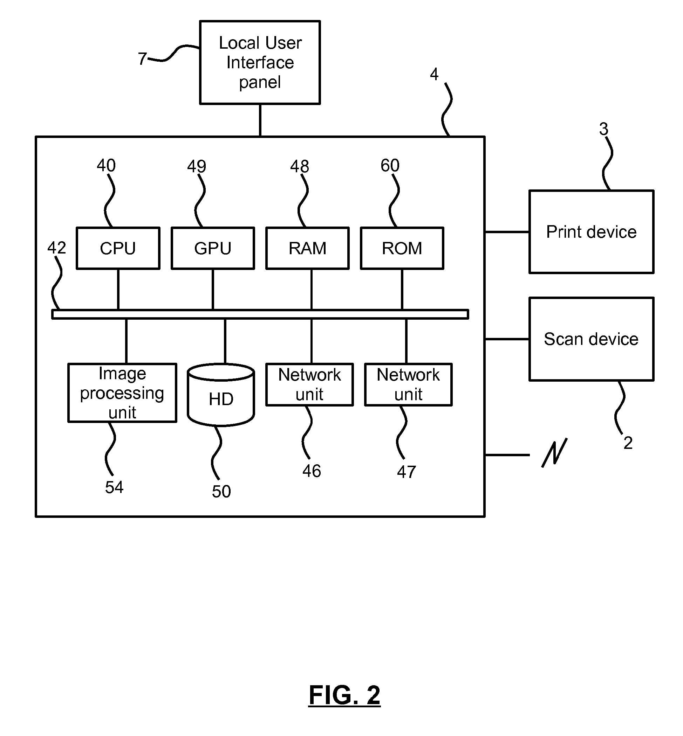

An embodiment of the control unit 4 is in more detail presented in Fig. 2. As shown in Fig. 2, the control unit 4 comprises a Central Processing Unit (CPU) 40, a Graphical Processor Unit (GPU) 49, a Random Access Memory (RAM) 48, a Read Only Memory (ROM) 60, a network unit 46, an interface unit 47, a hard disk (HD) 50 and an image processing unit 54 such as a Raster Image Processor (RIP). The aforementioned units 40, 49, 48, 60, 46, 47, 50, 54 are interconnected through a bus system 42. However, the control unit 4 may also be a distributed control unit.

The CPU 40 controls the respective apparatuses 2, 3 of the control unit 4 in accordance with control programs stored in the ROM 60 or on the HD 50 and the local user interface panel 7. The CPU 40 also controls the image processing unit 54 and the GPU 49.

The ROM 60 stores programs and data such as boot program, set-up program, various set-up data or the like, which are to be read out and executed by the CPU 40.

The hard disk 50 is an example of a non-volatile storage unit for storing and saving programs and data which make the CPU 40 execute a print process to be described later. The hard disk 50 also comprises an area for saving the data of externally submitted print jobs. The programs and data on the HD 50 are read out onto the RAM 48 by the CPU 40 as needed. The RAM 48 has an area for temporarily storing the programs and data read out from the ROM 60 and HD 50 by the CPU 40, and a work area which is used by the CPU 40 to execute various processes.

The interface card 47 connects the control unit 4 to scanning apparatus 2 and printing apparatus 3.

The network card 46 connects the control unit 4 to the network 8 and is designed to provide communication with the workstations 9, and with other apparatuses reachable via the network.

The image processing unit 54 may be implemented as a software component running on an operation system of the control unit 4 or as a firmware program, for example embodied in a field-programmable gate array (FPGA) or an application-specific integrated circuit (ASIC). The image processing unit 54 has functions for reading, interpreting and rasterizing the print job data. Said print job data contains image data to be printed (i.e. fonts and graphics that describe the content of the document to be printed, described in a Page Description Language or the like), image processing attributes and print settings.

Basic modes of operation for the reprographic system are scanning, copying and printing.

With the electric signals corresponding to the primary colours red (R), green (G) and blue (B) obtained during scanning, a digital image is assembled in the form of a raster image file. A raster image file is generally defined to be an array of regularly sampled values, known as pixels. Each pixel (picture element) has at least one value associated with it, generally specifying a colour or a shade of grey which the pixel should be displayed in. For example, the representation of an image may have each pixel specified by three 8 bit (24 bits total) values (ranging from 0 - 255) defining the amount of R, G, and B respectively in each pixel. In the right proportions, R, G, and B can be combined to form black, white, shades of grey, and an array of colours.

The digital image obtained by the scanning apparatus 2 may be stored on a memory of the control unit 4 and be handled according to a copy path, wherein the image is printed by the print apparatus 3. Alternatively, the digital image may be transferred from the control unit 4 to a client computer 9 (scan-to-file path). A user of the client computer 9 may decide to print a digital image, which reflects the printing mode of operation of the system.

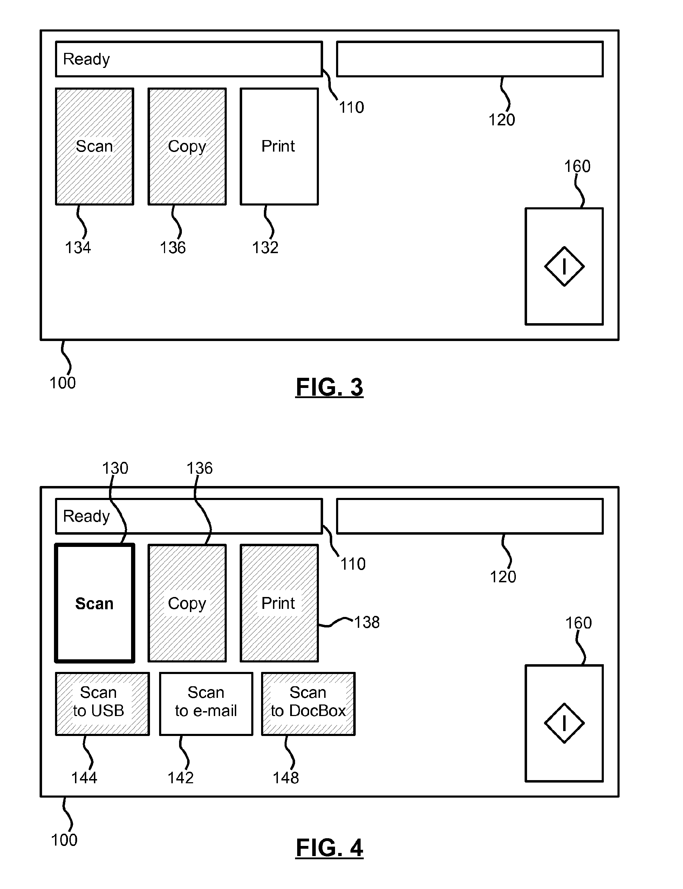

Fig. 3 shows schematically a screen 100 of a user interface according to the invention. The screen 100 comprises a message area 110 with a ready message, a status field 120 for displaying a status of the apparatus, a scan button 134 for selecting a scanning action, a copy button 136 for selecting a copy action, a print button 132 for selecting a print action and a green button 160 for initiating a selected action. The scan button 134 and the copy button 136 are provided with a hatch pattern to show that the scan button 134 and the copy button 136 are selectable, but have a lower likelihood to be selected than the print button 132 which is highlighted (no hatch pattern). This way, the print button 132 draws more attention from the user than the scan button 134 and the copy button 136. Therefore, the user will be tempted to first look at the print button 132 and consider selecting that particular button. Only after he has decided this is not the appropriate button, his look will wander away from the print button 132 and he will start considering the alternatives: scan button 134 and copy button 136.

It is envisaged that options are highlighted by increasing their contrast with the background of the options, by giving the options another colour than the non-highlighted options, by increasing the saturation of the colour of the option, by increasing the intensity of the colour of option, by increasing the size of the option, by making the text of an option bold faced, and/or by underlining the text of an option, and/or any other property that will make the highlighted option stand out from the non-highlighted options. The property may be a property of a text describing the option, an icon representing the option, a button representing the option, and/or any other user interface element.

As soon as the user makes his selection, for example by selecting the scan button 134 (figure 4), the selected option is marked as being the selected option 130. In the figure this marking is expressed by a wider border of the button. As the user has selected an option, it is not very likely that he will subsequently select an option that is not compatible with the option he just selected. In the example of the scan button 134 being selected by the user, the print button 132 is no longer the most likely option that will be selected subsequently, and therefore print button 132 is no longer highlighted. Instead a non-highlighted version 138 of the print button is displayed. This non-highlighted version 138 is still selectable allowing the user to correct an erroneous selection. However, by displaying the non-highlighted version 138 of the print button, the attention of the user is no longer immediately drawn to the print button.

Furthermore, a next set of options may become available to the user, such as selection buttons for selecting a target where to scan to, for example a "Scan to USB" button 144, a "Scan to e-mail" button 142, and a "Scan to DocBox" button 148. It is most likely that the user prefers his e-mail address to be the target for the scan operation. Therefore, the "Scan to e-mail" button 142 is highlighted, while the "Scan to USB" button 144 and the "Scan to DocBox" button 148 are not highlighted. Therefore, the attention of the user is drawn first to the "Scan to e-mail" button 142.

Note: a DocBox is a user specific storage in a reprographical apparatus or print/scan server for storing documents. A printer might be configured to not automatically print every document submitted to it, but to first store submitted documents in the DocBox for the user submitting the document.

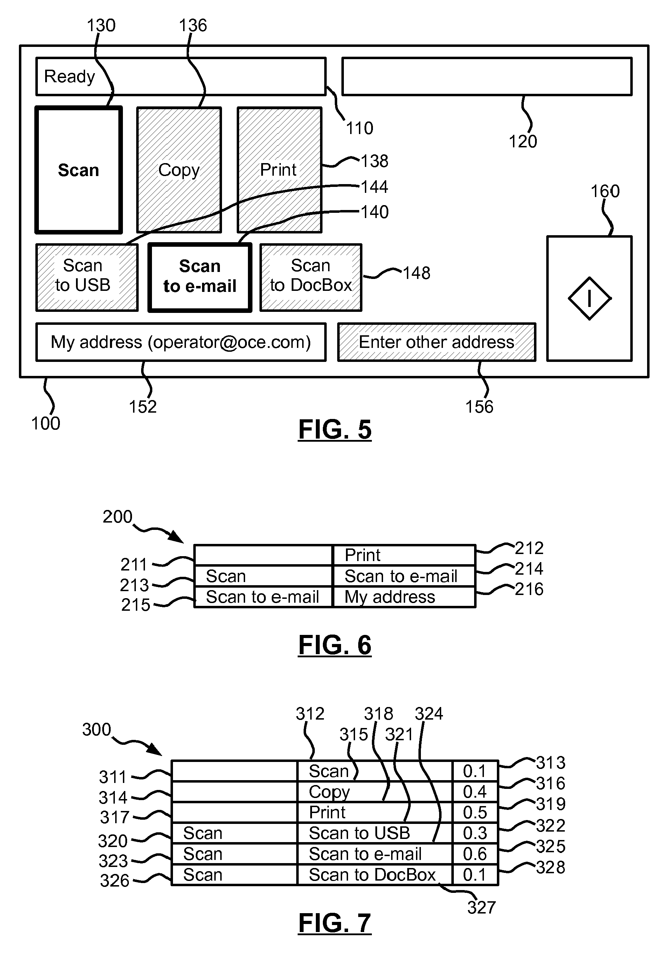

If the user indeed select the "Scan to e-mail" button 142, this button is no longer highlighted (figure 5), but is marked as an activated button 140 instead. The "Scan to USB" button 144 and the "Scan to DocBox" button 148 stay non-highlighted, as it is unlikely that the user selects different targets successively.

Instead, further options become available, namely buttons for selecting the particular e-mail address to be used as the target for the scan operation. A "My address" button 152 becomes available. (Of course this functionality is only available if the user identified himself to the apparatus.) Furthermore, a "Enter other address" button 156 becomes available. As most users send scanned documents to their own e-mail address, it is most likely that the user will subsequently select the "My address" button 152, and therefore this button is highlighted in order to draw the user's attention first to this button. The button "Enter other address" 156 is not highlighted.

Fig. 6 shows a table 200 that is stored in an apparatus according to the present invention, storing the most likely option to be selected for a previous option having been selected by a user. The first column in the table 200 stores a previous option having been selected by a user, while the second column stores the corresponding successive option that is most likely being selected by a user. In the first row, the first column is empty 211 representing the situation that no option has been selected yet. This might be the case if the apparatus is just powered up and has just initialised. However, this might also represent the case that the apparatus has just returned to a default state. For example, if a first user has finished using the apparatus, it might be undesirable to taking the selections of the first user into account for a second user. Therefore, completing specific operations, such as completing copying all documents in a document feeder, or completing a print operation might bring the apparatus in this default state, and for the purpose of this invention it is assumed that no options have been selected yet. In that case the first row with the empty first column 211 is applicable. The default state might also be entered by an idle timer that signals that no user activity has taken place during a preconfigured time period.

The first row of table 200 shows that from the default state (empty cell 211), it is most likely that a user will select the print option (second column of first row 212 refers to the print option). The second row contains in the first column 213 the option "Scan" and in the second column 214 the option "Scan to e-mail", defining that if the user has selected the "Scan" option, he is most likely to subsequently select the "Scan to e-mail" option. The third row stores in the first column 215 the option "Scan to e-mail" and in the second column 216 the option "My address", defining that the user is most likely to select the "My address" option after he has selected "Scan to e-mail" option.

Table 200 only shows three entries. Other entries might be present in a real-world table, but are not shown here in order to make more clear how the table should be interpreted. In reality the table would contain tens, hundreds, or even thousands of entries. It should be noted though that it is not necessary for the invention that every possible succession of options is present in the table.

In this way the table 200 can be used for determining the most likely subsequent option. The likelihoods of subsequent options are used to show the user by means of the highlighted buttons the options most likely to be selected by the user. The user is guided through the options to be selected and gets the impression that the system anticipates his steps through the system user interface. In a further embodiment the table 200 is extended by a third column, which third column links to a user or a group of users. This is advantageous because users may have deviating behaviour via the user interface of the reprographical system, and the system will now anticipate the behaviour of a specific user or group of users.

Table 300 (figure 7) is an extension of table 200. A third column is introduced showing a likelihood parameter 313, 316, 319, 322, 325, 328 for the likelihood that a corresponding first option 311, 314, 317, 320, 323, 326 (first column) is followed by a second corresponding option 312, 315, 318, 321, 324, 327 (second column). While table 200 only allows for options to be highlighted or not, because they are present as a subsequent option in the table or not, table 300 allows for all subsequent options being highlighted to a degree corresponding to the likelihood of the subsequent option to be selected next. For example, say the user has selected the option "Scan". The fourth till sixth row in table 300 contain this option in their first column 320, 323, 326. The subsequent options "Scan to USB" 321, "Scan to e-mail" 324, and "Scan to DocBox" 327, are expected to be selected next with a likelihood of 0.3 (322), 0.6 (325), and 0.1 (328) respectively. Therefore, in the user interface, the options "Scan to USB" 144, "Scan to e-mail" 142, and "Scan to DocBox" 148 may be shown respectively with buttons having a light grey button face, white button face, and middle grey button face respectively, showing the respective likelihood of the options available.

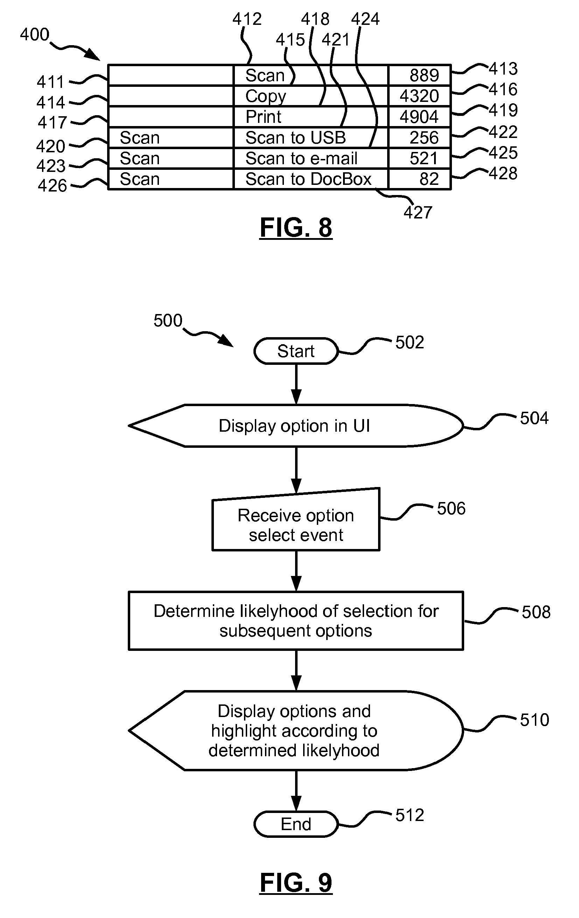

Table 400 (figure 8) is an alternative to table 300. Just like table 300 it shows a selected option 411, 414, 417, 420, 423, 426 in the first column and a subsequent option 412, 415, 418, 421, 424, 427 in the second column. In the third column, the likelihood parameter 413, 416, 419, 422, 425, 428 is not the likelihood itself, but is an absolute number of occurrences of the succession of the selected option in the first column and the subsequent option in the second column. The table 400 is updated every time the user makes a selection on the screen 100, i.e. the number in the third column of the row corresponding to the previous selection and the current user selection is incremented by one. Based on these occurrences the likelihood of subsequent options are calculated and used for highlighting the subsequent options.

In one embodiment, the table 400 starts empty when the apparatus is powered on for a first time. During initial usage, the table 400 will start to fill up and the apparatus starts to be able to predict subsequent options of the users. Initially, the predicting step might be suppressed, for example as long as the stored number of occurrences are below a preconfigured threshold. Alternatively, table 400 might be preconfigured with some (artificial) numbers of occurrences in order to jumpstart the prediction algorithm. During operation, the table 400 will be updated making the influence of the preconfigured numbers of occurrences slowly fade away.

Just like table 200, tables 300 and 400 may be provided with an additional column linking to a specific user or group of users in order to personalise the predictive behaviour of highlighting the most likely option to be selected.

Figure 9 shows a flow diagram 500 of a first embodiment of a method according to the invention. In a first step 502 the user starts working at the user interface of the reprographical system. This may be the default state wherein no option is supposed to have been selected (even though a previous user may have operated the apparatus and selected one or more options). It should be noted that it is not mandatory though to implement such a default state. In a second step 504 at least one option is displayed at the user interface. The system receives 506 a select event of a displayed option. A likelihood of selection for subsequent options is determined 508. In response to the selection of the option subsequent options are displayed 510 and highlighted according to the determined likelihood. In a sixth step 512 the end point of the method according to the first embodiment is reached.

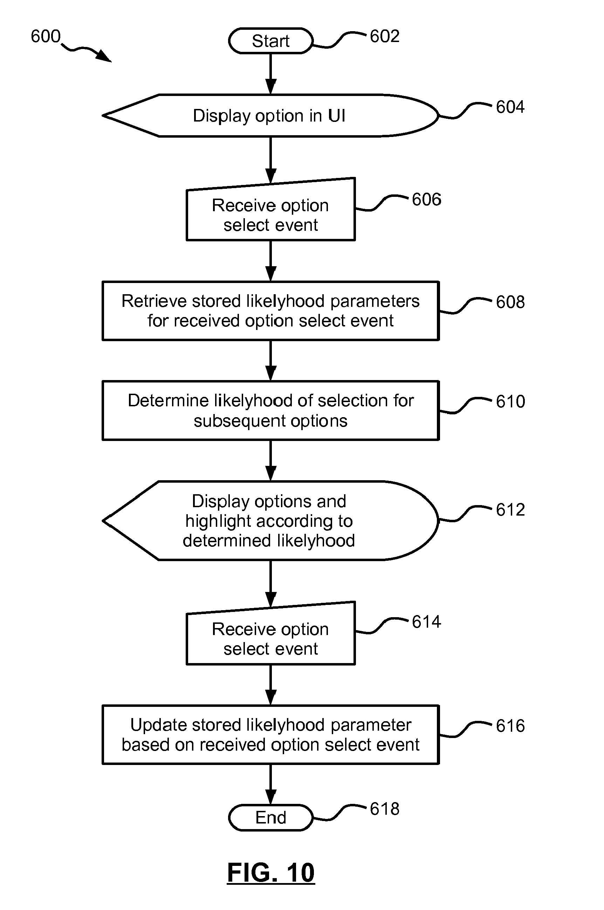

Figure 10 shows a flow diagram 600 of a second embodiment of a method according to the invention. The user starts 602 working at the user interface of the reprographical system. At least one option is displayed 604 at the user interface. The system receives 606 a select event of an option. Stored likelihood parameters for the received option of the select event are retrieved 608. A likelihood of selection for subsequent options is determined 610. The subsequent options are displayed 612 and highlighted according to the determined likelihood. The system receives 614 a select event of an option. The stored likelihood parameter is updated 616 based on the received option of the select event. For example, if the stored likelihood parameter is an absolute number of occurrences, the stored likelihood parameter is incremented. In a ninth step 618 the end point of the method according to the second embodiment is reached.

The above disclosure is intended as merely exemplary, and not to limit the scope of the invention, which is to be determined by reference to the following claims.

## Claims

1. Apparatus having a number of options for operating and/or configuring the apparatus, comprising:
user interface generation means, the user interface generation means being arranged to present an option to a user to allow the user to select the option in order to configure and/or operate the apparatus;
option predicting means for determining for an option of the at least part of the options the likelihood that the user will select the option;
wherein the user interface generation means generate in the user interface the at least part of the options with at least one option being highlighted corresponding to the likelihood determined by the option predicting means.

2. Apparatus according to claim 1 wherein an option having the highest likelihood according to the option predicting means is highlighted, and wherein options having a lower likelihood than the highest likelihood are not highlighted.

3. Apparatus according to claim 1 or 2 wherein an option being highlighted comprises displaying the option in the user interface with a display property of the option being determined by the likelihood of the option as determined by the option predicting means.

4. Apparatus according to claim 1, 2, or 3 wherein the display property is at least one of a colour and a size, and a contrast with regard to the background of the displayed option.

5. Apparatus according to any of claims 1-4 further comprising a storage storing for an option a likelihood parameter for deriving the likelihood that the particular option will be selected, and
wherein the option prediction means determine the likelihood of an option to be selected based on the stored likelihood parameter for the particular option.

6. Apparatus according to claim 5 further comprising likelihood parameter updating means for generating and/or updating the stored likelihood parameters.

7. Apparatus according to claim 5 or 6 wherein
- the likelihood updating means tracks for each pair of an option and a subsequently selected option the amount of occurrences during the operation of the apparatus by a user, and
- the option prediction means determine the likelihood of an option to be selected based on the last selected option and the stored amount of occurrences of subsequently selected options for this last selected option.

8. Apparatus according to claim 5 wherein:
- the storage comprises a preconfigured likelihood parameter for a pair comprising of a last selected option and an option to be selected of the at least part of the options, and
- the option prediction means determine the likelihood of an option to be selected based on the last selected option and the preconfigured likelihood parameter stored in the storage.

9. Apparatus according to any of claims 1-8 wherein the apparatus comprises a reprographical apparatus, such as a printer, a scanner, a copy machine and/or a facsimile machine.

10. Method for operating and/or configuring an apparatus having a number of options for operating and/or configuring the apparatus, comprising:
- presenting a user interface to a user, the user interface comprising an option of the options for operating and/or configuring the apparatus;
- receiving a user input selecting the option;
- determining for each option of a part of the options for operating and/or configuring the apparatus the likelihood that the user will select that particular option;
- presenting in the user interface the at least second part of the options with at least one option of the at least part of the options being highlighted corresponding to the determined likelihood of the option.

11. Method according to claim 10 wherein an option being highlighted comprises displaying the option in the user interface with a display property of the option being determined by the determined likelihood of the option.

12. Method according to claim 10 or 11 further comprising the steps of
- storing for an option a likelihood parameter for deriving the likelihood that the particular option will be selected, and
wherein determining the likelihood of an option to be selected comprises determining this likelihood based on the stored likelihood parameter for the particular option.

13. Method according to claim 12 further comprising the step of:
- generating an updated likelihood parameter based on one or more options being selected by the user, and
- storing the updated likelihood parameters.

14. Method according to claim 13 wherein
- generating an updated likelihood parameter comprises tracking for each pair of an option and a subsequently selected option the amount of occurrences during the operation of the apparatus by a user, and
- determining the likelihood of an option to be selected comprises determining the likelihood based on the last selected option and the stored amount of occurrences of subsequently selected options for this last selected options.

15. Computer program product that, when executed on a processor, performs the method of any of claims 10-14.
